# EUROPEAN PATENT SPECIFICATION

(11) **EP 0 679 674 B1**
(45) Date of publication and mention of the grant of the patent: **20.09.2000**
(21) Application number: 95106493.0
(22) Date of filing: 28.04.1995
(51) Int. Cl.: C08G 77/06, C08G 77/08

(54) **Method for preparing diorganopolysiloxane having a functional group at only one end of the molecular chain**
Verfahren zur Herstellung eines Diorganopolysiloxans,das an nur einem Ende der Molekülkette eine funktionelle Gruppe enthält
Procédé de préparation de diorganopolysiloxanes ayant un groupe fonctionnel seulement à une extrémité de la chaîne

(30) Priority: 28.04.1994 JP 11395194
(43) Date of publication of application: 02.11.1995
(73) Proprietor: Dow Corning Toray Silicone Company, Limited, Tokyo 103 (JP)
(72) Inventor: Okawa, Tadashi Dow Corning Toray, Ichihara-shi, Chiba Pref. (JP)
(74) Representative: Sternagel, Hans-Günther, Dr.

(56) References cited:
- EP-A- 0 331 753
- EP-A- 0 362 710
- EP-A- 0 455 163
- EP-A- 0 626 413

## Description

The present invention provides a manufacturing method of diorganopolysiloxane having a functional group at only one end of the molecular chain of high purity.

A diorganopolysiloxane with a functional group at only one end can be copolymerized with organic monomer by utilizing the reactivity of the functional group. The product siloxane is a useful modifier of organic resins since it can impart characteristics of organopolysiloxane, such as weather resistance, surface water-repellent characteristics, lubricity and gas permeability to the organic resin.

A method for the preparation of such a diorganopolysiloxane having a functional group at only one end of the molecular chain has been proposed wherein cyclic trisiloxane is subjected to a nonequilibrium polymerization reaction with alkyl lithium, or lithium silanolate, as the polymerization initiator. These reactions may occur either in the presence or absence of organosilane or organosiloxane which is capped at one end with hydroxyl group and acts as a molecular weight regulator. This nonequilibrium polymerization reaction is terminated by the addition of acid or organo functional group-containing organochlorosilane (see, for example, JP-A 59-78236, JP-A 1-131247, and JP-A 2-92933). However, when the diorganopolysiloxane with a functional group at only one end that is obtained by those methods is copolymerized with organic monomer, there have been problems like the drastic increase of viscosity during the reaction. In particular, even complete gelation can occur when the diorganopolysiloxane reaches a molecular weight greater than 10,000. Furthermore, unreacted organopolysiloxane often remains after the reaction. To study the causes of these problems, we analyzed such diorganopolysiloxanes by gel permeation chromatography. It was confirmed that, in addition to the primary peak attributable to such diorganopolysiloxane a secondary peak was observed on the higher molecular weight side of the primary peak. Further, the proportion of this secondary peak increased with increasing molecular weight of the product diorganopolysiloxane. It was concluded from these results that the diorganopolysiloxane obtained by these manufacturing methods contains both diorganopolysiloxane with functional groups at both ends and functional groups at neither end, as impurities. Consequently, there is a need for a manufacturing method for preparing diorganopolysiloxane having a functional group at only one end of the molecular chain of high purity, without forming by-products.

EP-A-626 413 that is a prior art reference according to Art. 54(3) EPC discloses a method for the high-purity synthesis of a diorganopolysiloxane having a functional group at only one molecular chain terminal, that is characterized by the preliminary silylation with a silylating agent of the silanol group-containing impurity present in the cyclic trisiloxane, and that is characterized by preliminarily converting the silanol group-containing impurity in the cyclic trisiloxane into a lithiated material by lithiation with an organolithium compound and then silylating this lithiated material using a silylating agent that contains silicon-bonded halogen.

From EP-A-331 753 a process for producing a diorganopolysiloxane having an alkenyl group at least at one end and an optional group at the other end, which comprises polymerizing cyclic hexaorganotrisiloxane using an alkali metal salt or organosilane or diorganopolysiloxane having an alkenyl group at one end and a silanol group at the other end as a polymerization initiator in the presence or absence of a molecular weight modifier comprising an organosilane or diorganopolysiloxane having an alkenyl group at one end and a silanol group at the other end, and stopping the reaction, is known.

Neither EP-A-626 413 nor EP-A-331 753 disclose the requirement of a combination of a nitril compound or an ester compound and specific aprotic solvents to avoid side reaction in the preparation of a diorganopolysiloxane having a functional group at only one end.

We have previously proposed a manufacturing method of diorganopolysiloxane having a functional group at only one end of the molecular chain wherein a nonequilibrium reaction is used. (JP-A 5-151052). Therein, a small amount of silanol group-containing impurities present in the cyclic trisiloxane, used as the raw material of the polymerization, are silylated in advance. While this method has been effective to inhibit the secondary production of diorganopolysiloxane with functional groups at both ends which was caused by the silanol group-containing impurities in the cyclic trisiloxane, it has not been possible to completely inhibit the secondary production of diorganopolysiloxane having functional group at neither end, or diorganopolysiloxane having functional groups at both ends. These latter products are formed by the dimerization or equilibration reaction of α-hydroxydiorganopolysiloxane, that occurs as the side reaction during the polymerization of cyclic trisiloxane.

Contrastingly, we have found that, when the conventional nonequilibrium polymerization reaction is carried out in the presence of a nitrile compound or an ester compound, and also in a specific polar solvent which does not contain activated hydrogen, the effect of the side reaction described above is extremely small. The present invention introduces a manufacturing method for preparing diorganopolysiloxane having a functional group at only one end of the molecular chain in high purity and in high yield.

The present invention therefore provides a manufacturing method for preparing a diorganopolysiloxane having a functional group at only one end of the molecular chain and having the general formula: R(R₂SiO)ₚB wherein R is an identical or different monovalent hydrocarbon group, B is a hydrogen atom or organosilyl group of the formula -SiR₂R' in which R is an identical or different monovalent hydrocarbon group, and R' is a hydrogen atom or an organic functional group, and p is an integer having a value of at least 1. The method comprises (I) polymerizing (A) cyclic trisiloxane of the general formula 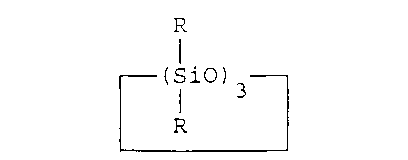 wherein R is an identical or different monovalent hydrocarbon group, optionally in the presence of (B) an organosilane or organosiloxane of the general formula R(R₂SiO)ₘH in which R is an identical or different monovalent hydrocarbon group, and m is an integer of at least 1, using (C) a lithium compound catalyst of the formula R(R₂SiO)ₙLi, in which R is an identical or different monovalent hydrocarbon group, and n is an integer of at least 0, and subsequently (II) terminating the above non-equlibrium polymerzation reaction using (F) an acid or an organohalogenosilane of the formula R'R₂SiX, in which R is an identical or different monovalent hydrocarbon group, R' is a hydrogen atom or an organic functional group, and X is a halogen atom, wherein the above non-equilibrium polymerization reaction (I) is carried out in the presence of (D) a nitrile compound or ester compound and (E) a polar solvent selected from tetrahydrofuran, 1,4 dioxane, ethylene glycol dimethyl ether, dimethyl formamide, dimethyl sulfoxide, hexamethyl phosphoric triamide and mixtures thereof.

Component (A) of the present invention, a cyclic trisiloxane, is the one known as the monomer for a typical nonequilibrium polymerization reaction. In the above formula for this cyclic siloxane, R is an identical or different monovalent hydrocarbon group. Specifically, R can be an alkyl group such as methyl, ethyl, propyl, butyl, pentyl, or hexyl; an alkenyl group such as vinyl, allyl, or hexenyl; or an aralkyl group such as benzyl or phenethyl. R is preferably a methyl group or vinyl group for ease of manufacture. The cyclic trisiloxane is examplified by 1,1,3,3,5,5-hexamethylcyclotrisiloxane, 1,1,3,3,5,5-hexaphenylcyclotrisiloxane, 1,1,3,3,5,5-hexavinylcyclotrisiloxane, 1,3,5-trimethyl-1,3,5-trivinylcyclotrisiloxane, 1,3,5-trimethyl-1,3,5-triphenylcyclotrisiloxane, 1,3,5-triethyl-1,3,5-trimethylcyclotrisiloxane, 1,3,5-trimethyl-1,3,5-tripropylcyclotrisiloxane, and 1,3,5-trimethyl-1,3,5-triphenethylcyclosiloxane. These cyclic trisiloxanes usually contain as impurities small amounts of silane or siloxane which have at least 2 silanol groups. It is therefore preferable to silylate these silanol groups with a silylation agent before carrying out the nonequilibrium polymerization reaction as in JP-A 5-151052. The silylation agent can be a silylation agent which contains halogen atoms bonded to silicon atoms. Examples include chlorosilanes such as trimethylchlorosilane, dimethyldichlorosilane, phenyldimethylchlorosilane, and t-butyldimethylchlorosilane; or bromosilanes such as trimethylbromosilane, and triethylbromosilane. The silylation agent can also contain nitrogen atoms bonded to silicon atoms. Examples include silazanes such as hexamethyldisilazane; and silylamines such as dimethylaminotrimethylsilane, diethylaminotrimethylsilane, and trimethylsilylimidazole; or silylamides such as bis (trimethylsilyl)acetoamide; trimethylsilyldiphenylurea, and bis (trimethylsilyl)urea.

Component (B) of the present invention (i.e., organosilane or organosiloxane) is used as needed to adjust the molecular weight of the diorganopolysiloxane having a functional group at only one end of the molecular chain. Component (B) has the general formula R(R₂SiO)ₘH, wherein R has its previous definition, and m is an integer having the value of at least 1, and preferably a value of 1-20. Examples of the organosilane include trimethylsilanol, dimethylvinylsilanol, dimethylphenylsilanol, and triphenylsilanol. Examples of the organosiloxane include dimethylsiloxane capped with hydroxydimethylsiloxy group at one end and with trimethylsiloxy group at the other end; methylphenylsiloxane capped with hydroxydimethylsiloxy group at one end and with trimethylsiloxy group at the other end; methylphenylsiloxane capped with hydroxydiphenylsiloxy group at one end and with trimethylsiloxy group at the other end; methylphenylsiloxane capped with hydroxydimethylsiloxy group at one end and with dimethylvinylsiloxy group at the other end; methylphenylsiloxane-methylvinylsiloxane copolymer capped with hydroxydimethylsiloxy group at one end and with trimethylsiloxy group at the other end; and methylphenylsiloxane-diphenylsiloxane copolymer capped with hydroxydimethylsiloxy group at one end and with trimethylsiloxy group at the other end. These organosilanes or organosiloxanes can be manufactured, for example, by careful hydrolysis of organomonochlorosilanes, or diorganopolysiloxanes which have halogen atom bonded to silicon atom only at one end of the molecular chain, the hydrolysis taking place in a basic dilute aqueous solution.

The lithium compound of component (C) acts as catalyst for the nonequilibrium polymerization reaction of (A), or of (A) and (B) constituent. This catalyst has the general formula R(R₂SiO)ₙLi, wherein R is an identical or different monovalent hydrocarbon group as defined above. n is an integer having a value of at least 0. When n is 1 or greater, it is preferred to have a value of 1-20 for the ease of manufacture. When n is 0, this constituent is an organic lithium compound which is available commercially, and can be easily obtained. On the other hand, when n is an integer 1 or greater, this constituent is lithium silanolate or lithium siloxanolate. The manufacturing methods of these lithium silanolates or lithium siloxanolates are known. For example, they can be obtained by reacting a silanol group-containing organosilane or organosiloxane, such as (B), with a lithium compound and then forming their respective lithium derivatives. Also, the lithium compound catalyst containing unreacted silanol group-containing organosilane or organosiloxane, obtained by reacting less moles of lithium compound than moles of the silanol groups, can be used as a mixture of (B) and (C). The lithium compound catalyst (C) can be an alkyl lithium such as n-butyl lithium, s-butyl lithium, t-butyl lithium, and methyl lithium; an aryl lithium such as phenyl lithium or xylyl lithium; an alkenyl lithium such as vinyl lithium or allyl lithium; and a lithium salt of an organosilane or an organosiloxane such as lithium trimethylsilanolate, lithium dimethylvinylsilanolate, and lithium triphenylsilanolate. The lithium compound used to prepare lithium silanolate or lithium siloxanolate can also be a lithium amide such as lithiumbis(diisopropyl)amide.

The lithium compound catalyst (C) is used in sufficient amount to cause the ring opening reaction (scission) of the cyclic trisiloxane (A). This catalyst (C) is added in such an amount that its molar ratio to (B) is from 100:0.01 to 0.01:100. Also, when the silylation agent is used for silylation of the silanol group-containing impurity in the (A) constituent, the addition should be preferably in such an amount that the molar ratio of (C) to (B) remaining after the silylation is also from 100:0.01 to 0.01:100. Furthermore, if this ratio is from 0.5:99.5 to 50:50, an appropriate reaction rate of the nonequilibrium polymerization reaction can be obtained, the manufacturing efficiency is improved, and the expensive lithium compound catalyst is saved.

Component (F), the acid or organohalogenosilane, is the constituent used to terminate our nonequilibrium polymerization reaction, and it forms a stable lithium salt by reaction with lithium silanolate. The acid can be a mineral acid, such as wet carbonic acid gas, hydrochloric acid or sulfuric acid; or a caroxylic acid such as acetic acid, propionic acid, or acrylic acid. The organohalogenosilane has the general formula R'R₂SiX wherein R is an identical or different monovalent hydrocarbon group, as defined above. R' is a hydrogen atom or organic functional group. Specifically, R' can be an alkenyl group such as vinyl group, allyl group, butenyl group, pentenyl group, hexenyl group, and heptenyl group; a 3-methacryloxypropyl group, a 3-acryloxypropyl group, or a 3-chloropropyl group. In the above formula, X is a halogen atom. Examples of organohalogenosilane (D) include dimethylchlorosilane, dimethylvinylchlorosilane, 3-methacryloxypropyldimethylchlorosilane, and 3-chloropropyldimethylchlorosilane.

When acid is used as constituent (F) to terminate the polymerization reaction, a diorganopolysiloxane having a silanol group at only one end of the molecular chain is obtained. Likewise, when a functional group-containing organohalogenosilane is used as constituent (F), a diorganopolysiloxane having one end capped with silyl residue (i.e., the remainder of the functional group-containing organohalogenosilane from which the halogen atoms are removed), is obtained. When halogenosilane, containing hydrogen atom bonded to silicon atom, such as dimethylchlorosilane, is used as (F), a diorganopolysiloxane having one end capped with hydrogen atom bonded to silicon atom is obtained. Further, by addition reaction of this diorganopolysiloxane product and an organo functional group-containing alkenyl compound, such as allylglycidylether, allylamine, allyl alcohol, trimethylolpropanemonoallylether, glycerolmonoallylether, and allylmethacrylate, in the presence of hydrosilation reaction catalyst such as platinum base catalyst, it is possible to manufacture a diorganopolysiloxane having one end capped with organo functional group bonded to silicon atom. In this latter process, the organo functional group can be protected by a protecting group, such as trimethylsilyl group, as needed. After the addition reaction is completed, this protecting group can be detached. Also, by the dehydrohalogenation reaction of adding the functional group-containing organohalogenosilane of constituent (F) to the diorganopolysiloxane having a silanol group at only one end of the molecular chain obtained by using an acid as constituent (D), it is possible to manufacture a diorganopolysiloxane having one end capped with an organo functional group bonded to silicon atom. In this case, a hydrogen halide scavenger, such as an organic amine compound or ammonia, is preferrably added.

Component (D) of the present invention, a nitrile compound or ester compound, functions to inhibit the formation of by-products during our nonequilibrium polymerization reaction. The nitrile compound and the ester compound, respectively, can be used individually as constituent (D). A mixture of the same can also be used. The nitrile compound can be acetonitrile, propionitrile, succinonitrile, butyronitrile, isobutyronitrile, valeronitrile, and α-tolunitrile, or a mixture of two or more of these can be used. Among these, acetonitrile is the most preferable by considering the ease of removal after the end of the polymerization reaction, its economy and properties. The ester compound can be acetic acid esters such as methyl acetate, ethyl acetate, propyl acetate, isopropyl acetate, butyl acetate, isobutyl acetate, sec-butyl acetate, pentyl acetate, isopentyl acetate, cyclohexyl acetate, and benzyl acetate; propionic acid esters such as methyl propionate, ethyl propionate, butyl propionate, and isopentyl propionate; or mixtures of two or more of these. Of the ester compounds, acetic acid ester is preferred, and methyl acetate or ethyl acetate are most preferable considering the ease of removal after the polymerization reaction, and the economy. Overall, the use of nitrile compound is preferred for component (D).

Component (E), a polar solvent not containing activated hydrogen, is used to promote our nonequilibrium polymerization. This solvent can be tetrahydrofuran, 1,4-dioxane, ethyleneglycol dimethylether, diethyleneglycol dimethylether, dimethyl formamide, dimethyl sulfoxide, or hexamethylphosphoric triamide, or a mixture of two or more of these. Preferably, tetrahydrofuran, dimethylformamide, and dimethyl sulfoxide are used considering their ability to promote the nonequilibrium polymerization reaction, in the ease of removal after the reaction, and the economy. Since the ability to promote the nonequilibrium polymerization varies as a function of the type of constituent (E) used, the amount to be added is generally determined by routine experimentation. For example, when 1,1,3,3,5,5-hexamethylcyclotrisiloxane is used as (A), and constituent (E) is tetrahydrofuran, the amount of (E) is preferably 50 to 200 wt% relative to the siloxane. If (E) is dimethyl sulfoxide, its amount is preferably 0.5 to 5 wt%. Similarly, if (E) is dimethylformamide, its amount is preferably 1 to 10 wt%, all relative to the siloxane (A).

In the present invention, the reaction temperature and time of the nonequilibrium polymerization reaction are not particularly limited, but it is necessary to adjust them sufficiently to avert equilibrium polymerization (i.e., a redistribution reaction). If the equilibrium polymerization does occur, a diorganopolysiloxane, capped with lithium silanolate or silanol groups at both ends, as well as a diorganopolysiloxane, in which neither end is capped with lithium silanolate or silanol groups, are formed as by-products. When 1,1,3,3,5,5-hexamethylcyclotrisiloxane is used as (A), a preferable condition for our nonequilibrium polymerization reaction is at the temperature of 0 to 40°C for 1 to 50 hours.

The progress of the non-equilibration polymerization reaction in our preparation method can be followed by monitoring the decrease in component (A) by an analytical means such as gas chromatography and the like. This non-equilibration polymerization reaction is preferably stopped by the addition of component (F) when component (A) conversion has reached a desired value. While component (A) conversion must be adjusted for the nature of component (A) and the nature of our monoterminal-functional diorganopolysiloxane product, this conversion will generally be 50 to 100% and preferably 70 to 90%.

Although our nonequilibrium polymerization reaction can be performed without using any solvent other than the (D) and (E) components, it is preferable to add an aprotic solvent to carry out the polymerization reaction in a homogeneous condition. The aprotic solvent can be aromatic solvent, such as toluene and xylene; or an aliphatic solvent such as hexane, heptane, and cyclohexane. Before the nonequilibrium polymerization reaction, it is necessary to remove moisture from each component or solvent as much as possible. If moisture exists, organopolysiloxane capped with lithium silanolate or silanol groups at both ends is undesireably formed as by-product.

Our diorganopolysiloxane having a functional group at only one end of the molecular chain has the general formula R(R₂SiO)ₚB. In this formula, R is an identical or different monovalent hydrocarbon group, as defined above. B is a hydrogen atom or an organosilyl group of the formula -SiR₂R', wherein R is as described above, R'is a hydrogen atom or an organo functional group as defined above, and p is an integer having a value of at least 1. The molecular weight of this diorganopolysiloxane is determined by the molar ratio of (B) and (C) present in the system during the nonequilibrium polymerization reaction relative to the amount of (A) consumed.

Since the content of impurities, like diorganopolysiloxane having functional groups at both ends or diorganopolysiloxane having functional group at neither end, is extremely low in our product diorganopolysiloxane with a functional group at only one end of the molecular chain. When our diorganopolysiloxane is subjected to a copolymerization reaction with an organic monomer, there is no drastic increase in viscosity during the reaction, let alone gelation. Consequently, it is useful as a modifier for various organic polymers to add lubricity, weather resistance, moisture repellancy, gas permeability, and the like to the organic polymer.

The present invention is further explained in detail by the following Examples. The number average molecular weight and polydispersity of our organopolysiloxane, having a functional group at only one end of the molecular chain, are calibrated values based on the standard polystyrene in gel permeation chromatography. Also, trimethylsilanol, dimethylformamide, acetonitrile, and ethyl acetate used in our Examples were dehydrated in advance.

### Example 1

1,1,3,3,5,5-hexamethylcyclotrisiloxane (100 grams) and toluene (75 grams) were mixed and subjected to azeotropic dehydration for 1 hour. After dehydration, the solution was cooled to room temperature, and 1.63 N hexane solution of n-butyl lithium (2.0 milliliters) was added and stirred for 10 minutes at room temperature. Subsequently, trimethylchlorosilane (0.336 gram) was added and stirred for 5 minutes at room temperature. A mixture of trimethylsilanol (0.741 gram), dimethylformamide (8.0 grams) and acetonitrile (25.0 grams) was then added and a white precipitate formed as the nonequilibrium polymerization reaction started. After start of the reaction, at the passage of fixed times (5.5 hours, 8 hours, and 22.2 hours), the reaction mixture was sampled and its nonequilibrium polymerization reaction was terminated by adding a drop of acetic acid. Dimethylpolysiloxane, having a functional group at only one end of the molecular chain, was obtained. From this dimethylpolysiloxane, the conversion of 1,1,3,3,5,5-hexamethylcyclotrisiloxane was tracked by gas chromatography (hereafter GLC). Also, the number average molecular weight and the polydispersity of the silanol group-functional dimethylpolysiloxane obtained were tracked by gel permeation chromatography (hereafter GPC). These results are shown in Table 1.

After 5.5 hours from the start of the reaction, diethylamine and methacryloxypropyldimethylchlorosilane were added in order to the reaction mixture, and the mixture was heated and stirred at 60°C for 2 hours. The by-product salts were then filtered out, and low boiling point substances were distilled off by heating under reduced pressure. After cooling, the precipitated salts were further filtered out and dimethylpolysiloxane having a methacryloxy group at only one end of the molecular chain was obtained. According to analysis by GPC of this dimethylpolysiloxane, its number average molecular weight was 10,723 and its polydispersity was 1.04.

**Table 1**

| Reaction time (hrs) | 5.5 | 8 | 22.2 |
|---|---|---|---|
| Conversion of 1,1,3,3,5,5-hexamethylcyclotrisiloxane(%) | 79.8 | 88.6 | 99.6 |
| Dimethylpolysiloxane having a silanol group at only one end of the molecular chain | | | |
| Number average molecular weight (Mn) | 10525 | 11770 | 13210 |
| Polydispersity=Mw/Mn | 1.04 | 1.04 | 1.08 |

### Comparison Example 1

A nonequilibrium polymerization reaction was performed as in Example 1 except that the amount of addition of dimethylformamide was 4.0 grams and acetonitrile was not added. After various times (6.17 hours, 8 hours, 22 hours), the reaction mixture was sampled as in Example 1, and dimethylpolysiloxane with a silanol group at only one end of the molecular chain was obtained. From the dimethylpolysiloxane, the conversion of 1,1,3,3,5,5-hexamethylcyclotrisiloxane was tracked by GLC. Also, the number average molecular weight and the polydispersity of this dimethylpolysiloxane were tracked by GPC. These results are given in Table 2.

After 6.17 hours from the start of the reaction, diethylamine and methacryloxypropyldimethylchlorosilane were added in order to the reaction mixture and, as in Example 1, dimethylpolysiloxane having a methacryloxy group at only one end of the molecular chain was obtained. According to GPC analysis, a number average molecular weight was obtained of 11,952, and the polydispersity obtained was 1.06.

**Table 2**

| Reaction time (hrs) | 6.17 | 8 | 22 |
|---|---|---|---|
| Conversion of 1,1,3,3,5,5-hexamethylcyclotrisiloxane (%) | 80.5 | 86.9 | 99.7 |
| Dimethylpolysiloxane having a silanol group at only one end of the molecular chain | | | |
| Number average molecular weight (Mn) | 11243 | 12328 | 13819 |
| Polydispersity=Mw/Mn | 1.05 | 1.05 | 1.13 |

### Example 2

A nonequilibrium polymerization reaction was done as in Example 1 except that dimethyl sulfoxide (2.0 grams) was used instead of the dimethylformamide of Example 1. After various times (3.83 hours, 5.33 hours, 22 hours), the reaction mixture was sampled as in Example 1, and dimethylpolysiloxane with a silanol group at only one end of the molecular chain was obtained. From the dimethylpolysiloxane, the conversion of 1,1,3,3,5,5-hexamethylcyclotrisiloxane was tracked by GLC. Also, the number average molecular weight and the polydispersity of the dimethylpolysiloxane were tracked by GPC. These results are listed in Table 3.

**Table 3**

| Reaction time (hrs) | 3.83 | 5.33 | 22 |
|---|---|---|---|
| Conversion of 1,1,3,3,5,5-hexamethylcyclotrisiloxane (%) | 80.6 | 90.4 | 100 |
| Dimethylpolysiloxane having a silanol group at only one end of the molecular chain | | | |
| Number average molecular weight | 9953 | 11133 | 12883 |
| Polydispersity | 1.05 | 1.05 | 1.10 |

### Comparison Example 2

A nonequilibrium polymerization reaction was performed as in Example 2 except that acetonitrile was not used. After various times (3.25 hours, 4.5 hours, 22 hours), the reaction mixture was sampled as in Example 2, and dimethylpolysiloxane with a silanol group at only one end of the molecular chain was obtained. From this dimethylpolysiloxane, the conversion of 1,1,3,3,5,5-hexamethylcyclotrisiloxane was tracked by GLC. Also, the number average molecular weight and the polydispersity of the dimethylpolysiloxane were tracked by GPC. These results are reported in Table 4.

**Table 4**

| Reaction time (hrs) | 3.25 | 4.5 | 22 |
|---|---|---|---|
| Conversion of 1,1,3,3,5,5-hexamethylcyclotrisiloxane (%) | 80.5 | 90.1 | 100 |
| Dimethylpolysiloxane having a silanol group at only one end of the molecular chain | | | |
| Number average molecular weight | 11037 | 11525 | 11077 |
| Polydispersity | 1.06 | 1.08 | 1.59 |

### Example 3

A nonequilibrium polymerization reaction was generated as in Example 1 except that ethyl acetate (25 grams) was used instead of the acetonitrile in Example 1. After various times (3.08 hours, 4.32 hours, 22 hours), the reaction mixture was sampled, as in Example 1, and dimethylpolysiloxane was obtained. From the dimethylpolysiloxane, the conversion of 1,1,3,3,5,5-hexamethylcyclotrisiloxane was tracked by GLC. Also, the number average molecular weight and the polydispersity of the dimethylpolysiloxane were tracked by GPC. These results are shown in Table 5.

**Table 5**

| Reaction time (hrs) | 3.08 | 4.32 | 22 |
|---|---|---|---|
| Conversion of 1,1,3,3,5,5-hexamethylcyclotrisiloxane (%) | 80.7 | 91.2 | 100 |
| Dimethylpolysiloxane having a silanol group at only one end of the molecular chain | | | |
| Number average molecular weight | 10311 | 12534 | 12170 |
| Polydispersity | 1.05 | 1.05 | 1.15 |

### Comparison Example 3

A nonequilibrium polymerization reaction was carried out in the same way as Example 3 except that ethyl acetate was not used. After various times (3 hours, 4.17 hours, 22 hours), the reaction mixture was sampled, and dimethylpolysiloxane with a silanol group at only one end of the molecular chain was obtained. From this dimethylpolysiloxane, the conversion of 1,1,3,3,5,5-hexamethylcyclotrisiloxane was tracked by GLC. Also, the number average molecular weight and the polydispersity were tracked by GPC. These results are given in Table 6.

**Table 6**

| Reaction time (hrs) | 3 | 4.17 | 22 |
|---|---|---|---|
| Conversion of 1,1,3,3,5,5-hexamethylcyclotrisiloxane (%) | 81.2 | 91.1 | 100 |
| Dimethylpolysiloxane having a silanol group at only one end of the molecular chain | | | |
| Number average molecular weight | 11668 | 12840 | 14308 |
| Polydispersity | 1.04 | 1.05 | 1.18 |

### Application Example

The dimethylpolysiloxane having a methacryloxy group at only one end of the molecular chain that was obtained in Example 1, (7.2 grams), butyl acrylate (16.8 grams) and toluene (30 grams) were admixed under a nitrogen atmosphere. To this mixture, 6 grams of toluene solution, which contained azobisisobutyronitrile (0.06 gram), were added dropwise. After completion, the mixture was heated and stirred at 60°C for 29 hours, and a toluene solution of a poly(butyl acrylate) grafted polydimethylsiloxane was obtained. Using a Fourier transform infrared spectrophotometer as the detector, and the characteristic absorption of SiMe₂ group at 800∼810 cm⁻¹ as the detecting wavelength, GPC measurement (hereafter GPC FT-IR) of the toluene solution of poly(butyl acrylate) grafted polydimethylsiloxane, was carried out. It was found that 95.8% of the dimethylpolysiloxane with a methacryloxy group at only one end of the molecular chain was copolymerized. From this result, it was found that the purity of the dimethylpolysiloxane obtained in Example 1 was 95.8%. The viscosity of the toluene solution of poly(butyl acrylate) grafted polydimethylsiloxane obtained was 944 centipoise (mPa.s).

For comparison, the dimethylpolysiloxane obtained in Comparison Example 1 was copolymerized with butyl acrylate in the same manner as described above. By GPC FT-IR analysis of the toluene solution of poly(butyl acrylate) graft-bonded polydimethylsiloxane, it was found that 91.4% of the dimethylpolysiloxane used was copolymerized. From this result, it was found that the purity of the dimethylpolysiloxane obtained in Comparison Example 1 was 91.4%. The viscosity of the toluene solution of poly(butyl acrylate) graft-bonded polydimethylsiloxane was 2,500 centipoise (mPa.s).

## Claims

1. A method for preparing a diorganopolysiloxane of the formula R(R₂SiO)ₚB having a functional group at only one end of the molecular drain wherein R is an independently selected monovalent hydrocarbon group, B is selected from a hydrogen atom or an organosilyl group having the formula -SiR₂R' in which R is as defined above, R' is selected from a hydrogen atom or an organo functional group, and p is an integer having a value of at least 1, said method comprising:
(I) polymerizing, in a nonequilibrium polymerization reaction,
(A) a cyclic trisiloxane having the formula 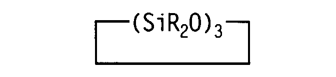 in which R is as defined above, optionally in the presence of
(B) a compound having its formula R(R₂SiO)ₘH in which R is as defined above and m is an integer having a value of at least 1, using
(C) a lithium compound catalyst of the general formula R(R₂SiO)ₙLi in which R is as defined above and n is an integer having a value of at least 0, said nonequilibrium polymerization reaction taking place in the presence of
(D) a compound selected from a nitrile compound or an ester compound and
(E) a polar solvent selected from tetrahydrofuran, 1,4-dioxane, ethyleneglycol dimethylether, dimethylformamide, dimethylsulfoxide, hexamethylphosphoric triamide and mixtures thereof, and
(II) terminating the nonequilibrium polymerization reaction product obtained from step (I) using
(F) a compound selected from an acid or an organohalogenosilane of the formula R'R₂SiX in which R and R' are as defined above and X is a halogen atom.

2. The method according to claim 1 wherein said cyclic trisiloxane (A) is selected from 1,1,3,3,5,5-hexamethylcyclotrisiloxane, 1,1,3,3,5,5-hexaphenylcyclotrisiloxane, 1,1,3,3,5,5-hexavinylcyclotrisiloxane, 1,3,5-trimethyl-1,3,5-trivinylcyclotrisiloxane, 1,3,5-trimethyl-1,3,5-triphenylcyclotrisiloxane, 1,3,5-triethyl-1,3,5-trimethylcyclotrisiloxane, 1,3,5-trimethyl-1,3,5-tripropylcyclotrisiloxane and 1,3,5-trimethyl-1,3,5-triphenethylcyclotrisiloxane.

3. The method according to claim 1 wherein said compound (B) is selected from the group consisting of trimethylsilanol, dimethylvinylsilanol, dimethylphenylsilanol and triphenylsilanol.

4. The method according to claim 1 wherein said compound (D) is selected from acetonitrile, propionitrile, succinonitrile, butyronitrile, isobutyronitrile, valeronitrile, and α-tolunitrile and mixtures thereof.

## Patentansprüche

1. Verfahren zur Herstellung eines Diorganopolysiloxans der Formel R(R₂SiO)ₚB mit einer funktionellen Gruppe an nur einem Ende der Molekülkette, wobei R eine unabhängig voneinander ausgewählte einbindige Kohlenwasserstoffgruppe ist, B ausgewählt ist aus einem Wasserstoffatom oder einer Organosilylgruppe der Formel-SiR₂R', in der R wie oben definiert ist, R' ausgewählt ist aus einem Wasserstoffatom oder einer organofunktionellen Gruppe und p eine ganze Zahl mit einem Wert von wenigstens 1 ist, wobei dieses Verfahren umfaßt:
(I) Polymerisieren in einer Nichtgleichgewichtspolymerisationsreaktion
(A) eines cyclischen Trisiloxans mit der Formel 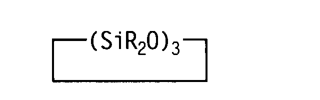 in der R wie oben definiert ist, wahlweise in Gegenwart
(B) einer Verbindung mit der Formel R(R₂SiO)ₘH, in der R wie oben definiert ist und m eine ganze Zahl mit einem Wert von wenigstens 1 ist, unter Verwendung
(C) einer Lithiumverbindung als Katalysator der allgemeinen Formel R(R₂SiO)ₙLi, in der R wie oben definiert ist und n eine ganze Zahl mit einem Wert von wenigstens 0 ist, wobei diese Nichtgleichgewichtspolymerisationsreaktion in Gegenwart
(D) einer Verbindung, ausgewählt aus einer Nitrilverbindung oder einer Esterverbindung, und
(E) eines polaren Lösungsmittels, ausgewählt aus Tetrahydrofuran, 1,4-Dioxan, Ethylenglykoldimethylether, Dimethylformamid, Dimethylsulfoxid, Hexamethylphosphorsäuretriamid und Mischungen davon, stattfindet, und
(II) Beenden des Wachstums des Produkts der Nichtgleichgewichtspolymerisationsreaktion, das in Schritt (I) erhalten wird unter Verwendung
(F) einer Verbindung, ausgewählt aus einer Säure oder eines Organohalogensilans der Formel R'R₂SiX, in der R und R' wie oben definiert sind und X ein Halogenatom ist.

2. Verfahren nach Anspruch, 1 wobei dieses cyclische Trisiloxan (A) ausgewählt ist aus 1,1,3,3,5,5-Hexamethylcyclotrisiloxan, 1,1,3,3,5,5-Hexaphenylcyclotrisiloxan, 1,1,3,3,5,5-Hexavinylcyclotrisiloxan, 1,3,5-Trimethyl-1,3,5-trivinylcyclotrisiloxan, 1,3,5-Trimethyl-1,3,5-triphenylcyclotrisiloxan, 1,3,5-Triethyl-1,3,5-trimethylcyclotrisiloxan, 1,3,5-Trimethyl-1,3,5-tripropylcyclotrisiloxan und 1,3,5-Trimethyl-1,3,5-triphenethylcyclotrisiloxan.

3. Verfahren nach Anspruch 1, wobei diese Verbindung (B) ausgewählt ist aus der Gruppe bestehend aus Trimethylsilanol, Dimethylvinylsilanol, Dimethylphenylsilanol und Triphenylsilanol.

4. Verfahren nach Anspruch 1, wobei diese Verbindung (D) ausgewählt ist aus Acetonitril, Propionitril, Succinonitril, Butyronitril, Isobutyronitril, Valeronitril und α-Tolunitril und Mischungen davon.

## Revendications

1. Un procédé de préparation d'un diorganopolysiloxane de la formule R(R₂SiO)ₚB ayant un groupe fonctionnel à une seule extrémité de la chaîne moléculaire, où R est un radical hydrocarboné monovalent choisi indépendamment, B est choisi parmi un atome d'hydrogène ou un groupe organosilyle ayant la formule -SiR₂R' où R est tel que défini ci-dessus, R' est choisi parmi un atome d'hydrogène ou un groupe fonctionnel organique et p est un nombre entier ayant une valeur d'au moins 1, ledit procédé consistant à
(I) polymériser, dans une réaction de polymérisation non équilibrée,
(A) un trisiloxane cyclique ayant la formule 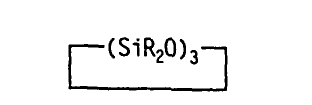 où R est tel que défini ci-dessus, facultativement en présence de
(B) un composé ayant la formule R(R₂SiO)ₘH où R est tel que défini ci-dessus et m est un nombre entier ayant une valeur d'au moins 1, en utilisant
(C) un catalyseur qui est un composé du lithium de la formule générale R(R₂SiO)ₙLi où R est tel que défini ci-dessus et n est un nombre entier ayant une valeur d'au moins 0,
ladite réaction de polymérisation non équilibrée ayant lieu en présence de
(D) un composé choisi parmi un nitrile ou un ester et
(E) un solvant polaire choisi parmi le tétrahydrofuranne, le 1,4-dioxanne, l'éther diméthylique d'éthylène-glycol, le diméthylformamide, le diméthylsulfoxyde, le triamide de l'acide hexaméthylphosphorique et leurs mélanges, et
(II) terminer le produit de réaction de polymérisation non équilibrée obtenu par l'étape (I) en utilisant
(F) un composé choisi parmi un acide ou un organohalogénosilane de la formule R'R₂SiX où R et R' sont tels que définis ci-dessus et X est un atome d'halogène.

2. Le procédé selon la revendication 1, dans lequel ledit trisiloxane cyclique (A) est choisi parmi le 1,1,3,3,5,5-hexaméthylcyclotrisiloxane, le 1,1,3,3,5,5-hexaphénylcyclotrisiloxane, le 1,1,3,3,5,5-hexavinylcyclotrisiloxane, le 1,3,5-triméthyl-1,3,5-trivinylcyclotrisiloxane, le 1,3,5-triméthyl-1,3,5-triphénylcyclotrisiloxane, le 1,3,5-triéthyl-1,3,5-triméthylcyclotrisiloxane, le 1,3,5-triméthyl-1,3,5-tripropylcyclotrisiloxane et le 1,3,5-triméthyl-1,3,5-triphénéthylcyclotrisiloxane.

3. Le procédé selon la revendication 1, dans lequel ledit composé (B) est choisi dans la classe formée par le triméthylsilanol, le diméthylvinylsilanol, le diméthylphénylsilanol et le triphénylsilanol.

4. Le procédé selon la revendication 1, dans lequel ledit composé (D) est choisi parmi l'acétonitrile, le propionitrile, le succinonitrile, le butyronitrile, l'isobutyronitrile, le valéronitrile et le α-tolunitrile, et leurs mélanges.
